# EUROPEAN PATENT APPLICATION

(11) **EP 2 045 992 A1**
(43) Date of publication of application: **08.04.2009**
(21) Application number: 07301431.8
(22) Date of filing: 04.10.2007
(51) Int. Cl.: H04L 29/06

(54) **A method for accessing a portable device, corresponding portable device, host device and system**

(71) Applicant: GEMPLUS, 13420 Gémenos (FR)
(72) Inventor: Lagosanto, Laurent, 13009, MARSEILLE (FR); Van Haver, Patrick, 83740, LA CADIERE D'AZUR (FR); Amiel, Patrice, 13290, LES MILLES (FR)

(57) **Abstract**

The invention relates to a method for accessing a portable device, said portable device being connected to a host device.

According to the invention, said host device, as client, opens a communication channel (56) to said portable device, as server, according to a first network communication protocol, and said portable device, as client, uses said communication channel (56) to transport data to said host device, as server, according to a second network communication protocol, without the implementation of any complex infrastructure.

The invention relates also to a corresponding system for accessing a portable device, a corresponding portable device accessible from outside and a corresponding host device for accessing a portable device.

## Description

### Field of the invention:

The invention relates, in a general manner, to a method for accessing a portable device.

The invention also pertains to a system for accessing a portable device.

Moreover, the invention relates to a portable device accessible from outside.

Lastly, the invention pertains to a host device for accessing a portable device.

### State of the art:

It is known to access a portable device, like a SIM (acronym for "Subscriber Identity Module") card, from a remote OTA (acronym for "Over the Air") platform through a mobile communication network, in order to administrate the SIM card. To perform such a remote administration, the SIM card is connected to a mobile phone, as host device. The mobile phone is involved as an intermediary communication device between the OTA platform, as server, and the SIM card, as client.

It is to be recalled that a server is a computer system providing one or several applicative services to other computer systems termed clients through a communication network. To benefit from an applicative service, a client sends a corresponding request to the server.

More exactly, firstly, the remote OTA platform sends to the SIM card, through the mobile communication network, and via the mobile phone, a SMS (acronym for "Short Message service") message, so as to initiate the remote access to the SIM card, for its administration from the OTA platform. Then, the SIM card, as client, opens a first connection using a TCP/IP (acronyms for "Transport Control Protocol/ Internet Protocol") communication protocol. Next, the SIM card, as client, sends to the OTA platform a request on a second connection using a HTTP (acronym for "HyperText Transfer Protocol") communication protocol, to dialog according to an OTA IP protocol compliant with OMA (acronym for "Open Mobile Alliance") specifications.

The SIM card cooperates thus with the mobile phone to communicate with the remote OTA platform.

However, such a known method for accessing the portable device is not applicable to a local access to the portable device from the host device.

As a matter of fact, a major disadvantage of the known method just described hereinabove is that, in such a case, the access to the portable device, linked to the host device, has to involve an OTA platform.

As a matter of fact, the OTA platform transmits a SMS message to the host device, so as to initiate the dialog with the portable device.

In other words, the access to the portable device needs to be connected to the OTA platform, i.e. through a telecommunication infrastructure external to the system comprising the portable device and the host device.

However, a telecommunication infrastructure is complex and therefore costly to implement.

### Summary of the invention:

The invention eliminates such a major disadvantage by providing a method for accessing a portable device that is connected to a host device.

According to the invention, the host device, as client, opens a communication channel to the portable device, as server, according to a first network communication protocol, and the portable device, as client, uses the open communication channel to transport data to the host device, as server, according to a second network communication protocol.

In other words, the host device, as client, initiates a connection, to the portable device, as server, while implementing a network communication protocol, then the portable device changes its role by becoming a client, while implementing another network communication protocol, to transport data to the host device becoming a server.

More exactly, the open connection includes one access point on each of its sides, i.e. one and the same access point on the host device side and one and the same access point on the portable device side. The two access points, once linked, define the open connection between the host device and the portable device.

Thus, the roles of "client" and "server" are thus interchanged between the portable device and the host device by using one and the same connection.

More precisely, the portable device firstly plays the role of a server, and then, the role of a client. As to the host device, the host device firstly plays the role of a client, and then, the role of a server.

We understand that the access to the portable device does not need that the portable device be connected to an OTA platform, as remote server, requiring a complex and costly implementation of a telecommunication infrastructure.

The portable device is therefore accessible from the host device, without implementing a telecommunication infrastructure, in a simple and cheap manner.

To access the portable device, the portable device firstly plays the role of a server, as being the recipient of a request transmitted by its originator, the host device, as client, and then, the portable device plays the role of a client, as being the originator of a request transmitted to its addressee, the host device, as server, while using one and the same communication channel.

According to another aspect, the invention is a system for accessing a portable device, as a first network entity. The portable device is connected to a host device. The system includes the portable device and the host device.

According to the invention, the host device, as client, is configured to open a communication channel to the portable device, as server, according to a first network communication protocol. Then, the portable device, as client, is configured to use the open communication channel to transport data to the host device, as server, according to a second network communication protocol.

According to a further aspect, the invention is a portable device accessible from outside.

According to the invention, the portable device is configured to open a communication channel, as server, according to a first network communication protocol, and the portable device is configured to use the open communication channel to transport data to outside, as client, according to a second network communication protocol.

As portable device, it can be any embedded electronic device that a user can carry. As embedded electronic device, the portable comprises at least one microprocessor and at least one memory or being connected to at least one memory. For example, it can constitute a SIM (acronym for "Subscriber Identity Module") card, a smart card, a personal token or a dongle of the USB (acronym for "Universal Serial Bus") type which does not need any specific reader to communicate with a host device.

According to a further aspect, the invention is a host device for accessing a portable device.

According to the invention, the host device is configured to open a communication channel, as client, according to a first network communication protocol, and the host device is configured to use the open communication channel to transport data, as server, from outside, according to a second network communication protocol.

As host device, it can be a user device, for example, a handheld computer like a mobile telephone or a PDA (acronym for "Personal Digital Assistant"), or a personal computer, or a mobile laptop.

### Brief description of the drawings:

Additional features and advantages of the invention will be more clearly understandable after reading a detailed description of one single preferred embodiment, given as an indicative and not limitative example, in conjunction with the following drawings:
- Figure 1 illustrates a simplified diagram of an embodiment of a system comprising a personal computer, as host device, and a smart card, as portable device, being adapted to provide an access to the smart card, firstly as server, and then as client, according to the invention;
- Figure 2 is a flow chart of an exemplifying method for accessing a smart card implemented by the system of figure 1;
- Figure 3 illustrates a first embodiment of a message flow between a smart card and a personal computer, as the two entities implementing the method for accessing the smart card of figure 2;
- Figure 4 is a second embodiment of a message flow between a smart card and a personal computer implementing a proxy, as the two entities implementing the method for accessing the smart card of figure 2; and
- Figure 5 represents a communication channel used by a message flow between the personal computer 11 and the smart card 12 of figure 3 or figure 4.

### Detailed description of one embodiment:

Herein under is considered a case in which the invention method for accessing a smart card, as portable device, that is connected to a personal computer, as host device. However, it is only for exemplifying purposes and is not considered to reduce the scope of the present invention.

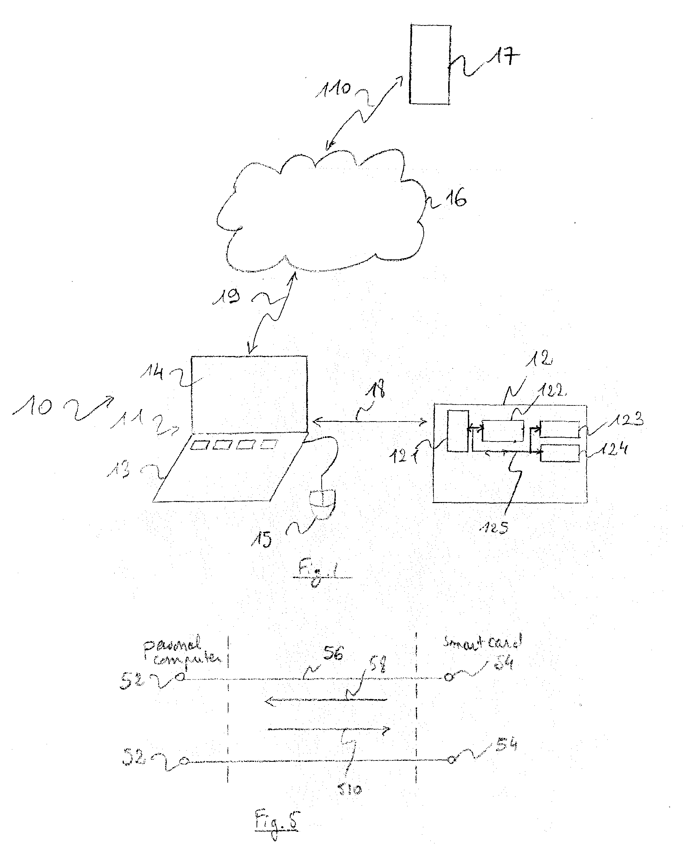

Figure 1 shows an electronic system 10 comprising a personal computer 11, as host device, and a smart card 12 or the like, as portable device.

The smart card 12 is inserted within a hardware element (not shown), like a smart card reader or the like.

The hardware element includes an Input/Output interface.

A connector compliant with a standard, for example, like USB, SD (acronym for "Secure Digital") or MMC (acronym for "MultiMediaCard"), as a mass-storage device, constitutes the Input/Output interface. Such a connector uses a corresponding mass-storage communication protocol to exchange data with outside. The mass-storage communication protocol is available from the operating system of the personal computer 11. Such a kind of connector allows to avoid a user to install a network driver on the personal computer 11 and configure the network.

The hardware element is itself connected to the personal computer 11.

The smart card 12 includes an Input/Output interface 121 compliant with the Input/Output interface included within the hardware element, a microprocessor 122, and several memories 123 and 124.

The contactless (via an antenna, an infrared link, Bluetooth, and/or the like) and/or contact Input/Output interface 121 allows to communicate data to and/or from the microprocessor 122 with at least one external electronic entity, like the personal computer 11 through the hardware element. The Input/Output interface 121 is connected to the hardware element, through a bi-directional link 18.

The smart card 12 is thus able to cooperate with the personal computer 11.

The microprocessor 122 of the smart card 12 processes, controls and communicates data internally, through an internal bus 125, with all the different other electronic components incorporated within the smart card 12, such as memories 123 and 124, to read data from them and/or to write data into them.

Furthermore, the microprocessor 122 of the smart card 12 processes, controls and communicates data with outside through the Input/Output interface 121.

The memories 123 and 124 include volatile and non volatile memories, to store data and/or application(s) that may be accessed from outside.

The memory 123 is accessible from the personal computer 11 at least in part when the smart card 12 is accessed as being a local server.

The personal computer 11 includes all the electronic components, like a central unit, volatile and non volatile memories, and so on (not shown), that are necessary to operate.

A user accesses the personal computer 11 through a man machine interface, in order to be able to exploit, at least in part, one or several services accessible through the personal computer 11. The user interacts with the man machine interface and operates the personal computer 11. The man machine interface comprises a keypad 13 to enter typing information, a display 14 to view information, and a pointer 15 to point and/or select information, like a mouse, a loudspeaker and a microphone.

The personal computer 11 is equipped with a modem (not shown) to communicate data, through an Internet network 16, via bi-directional lines 19 and 110 with one or several remote servers 17. Other remote servers (not shown) can be accessible from the personal computer 11 through other link(s). For instance, a server within a computer is accessible from the personal computer 11 through a short range radiofrequency link, like Bluetooth, or a server within a mobile phone through an infrared ray interface.

The communications within the network are made by implementing communication protocols that are in compliance with one or several standards.

As known per se, the communication standard within the Internet network, or the like, comprises five stacked layers peculiar to such a type of network. A communication protocol is selected according to the desired application, like for example interrogation of web pages, transfer of files, electronic mail, forum or news, and so on. A given layer offers one or several services to an upper layer and requires services from a lower layer. Among the five layers, from bottom to top, there are a physical layer, like a USB and/or IEEE (acronym for "Institute of Electrical & Electronics Engineers") 802.3 and/or IEEE 802.11 layer(s), a data link layer ("PPP", "slip", and so on), a network addressing layer ("IP"), a transport layer ("TCP"), and an application layer ("http", "ftp", "e-mail", "streaming video", "voice over IP" and so on).

The network addressing layer and the transport layer are implemented notably through some network libraries with which they communicate. When the network is Internet, these layers are implemented by using a socket library. Such an organization allows a web browser to create a request to access a server, e.g. to consult "Web" pages (http protocol), to transfer files (ftp protocol), to transmit electronic mails (e-mail protocol) relating to the network access, and so on, be it a remote server or a local server.

According to an interesting feature of the invention, the personal computer 11 is configured to create a connection, as client, to the smart card 12, as local server, by using a TCP/IP communication protocol.

To configure the personal computer 11, a corresponding application is preinstalled on the personal computer 11, without contravening its security rules. Such a pre-installation may be the result of a downloading of the appropriate application from a remote server 17 connected through the Internet network 16 to the personal computer 11, or the result of automatic installation of the appropriate application from the smart card 12 or at the connection of the smart card 12 to the personal computer 11.

To create such a connection between the personal computer 11 and the smart card 12, the personal computer 11 has an access point, as an exit point of the personal computer 11 that is connected to an access point, as an entry point of the smart card 12. The two access points, once linked with each other, define a unique socket that relies the personal computer 11, as client, to the smart card 12, as server.

The smart card 12 has to define a reserved access point, as entry point, with a pre-defined network address, to be accessed as server with TCP/IP protocol and used as client with HTTP protocol. The reserved access point has to be known from an application implemented by the personal computer 11.

The personal computer 11 initiates the connection to the smart card 12, as TCP/IP server.

It is to be noted that the personal computer 11, as host device, is therefore considered as TCP/IP client, and not as TCP/IP server, as known by the supra described solution.

According to another interesting feature of the invention, the smart card 12 is adapted to open a connection, as server, by using the TCP/IP communication protocol.

The smart card 12 supports in particular Internet protocols, and is able to listen on a reserved TCP/IP port that has previously been defined. For example, the smart card 12 integrates an administration agent that manages an opening session and, in particular, listens on the TCP/IP port.

The smart card 12 is, thus, rendered accessible, through the open connection, as an Internet node. The smart card 12 becomes a local server, thus providing at least one applicative service to any other external client, and, in particular, to the personal computer 11.

Unlike the solution indicated within the introduction of the present description, the smart card 12 performs a passive connection opening process according to the invention by listening on a pre-defined port or access point, as entry point, while the SIM card performs an active connection opening process by initiating it through the transmission of a corresponding TCP/IP request.

Moreover, the smart card 12 is adapted to use the open connection, as client, through the two access points that have already been defined by the created connection, to transmit network data to the personal computer 11, by using a HTTP communication protocol.

The open connection constitutes an identified communication channel that relies the personal computer 11, as HTTP server, and the smart card 12, as HTTP client.

Likewise, the personal computer 11 is configured to use the open connection, as server, to receive data originating from the smart card 12, by using the HTTP communication protocol or the like. Therefore, the TCP/IP server socket is re-used, to send, from the smart card 12, as HTTP client, for example OMA commands, like HTTP POST, as known per se. In such a case, the whole OMA dialog may be performed, except the creation of the connection.

Optionally, once the communication channel has been open, a HTTPS communication protocol can precede the HTTP communication protocol. According to such a variant, the smart card 12 remains a TCP/IP server and becomes a HTTPS client before becoming a HTTP client.

We understand that the role of each entity side is inverted by using the same connection. In a first step, the smart card 12 is a server for the establishment of a connection, and, in a second step, the smart card 12 is a client for the dialog that follows the establishment of the connection. Conversely, in the first step, the personal computer 11 is a client for the establishment of the connection, and, in the second step, the personal computer 11 is a server for the dialog that follows the establishment of the connection.

While using only one communication channel, the personal computer 11 can transmit to the smart card 12 any administration command that is processed by the administration agent provided by the smart card 12. The administration command received by the administration agent is forwarded to a Smart Card Web server that hosts one or several applications, also termed servlets, like a RFM (acronym for "Remote File Management"), a RAM (acronym for "Remote Applet Management"), a ETSI File System Management, and/or any other servlet.

Such an access to the smart card 12 can be used advantageously to be locally administrated, for example, at a point of sale of such a type of smart cards by a personal computer, at a public personal computer by a buyer of the smart card, and/or at a development personal computer. It is thus possible to administrate, "in situ", i.e. to modify, to add, to remove, to update, and so on one or several applications, network configuration parameters, tools and/or files provided on the smart card 12.

It is to be recalled that a "local" access to the smart card 12, as portable device, means that there is no intermediary complex entity or infrastructure, expensive to be implemented between the smart card 12 and the personal computer 11, as host device. In other words, the access to the smart card 12 is carried out, nearly in a direct manner, from the personal computer 11. However, it is to be noted that the personal computer 11, as host device, can be controlled from another personal computer linked to the host, for example through an Intranet network or an Internet network.

As we understand, the hereinabove described solution has therefore the following advantages:
- the smart card 12 is accessible from the personal computer 11, without having that the system 10 be connected to a remote OTA platform, as remote server, and without knowing the host device (personal computer) environment, in order to allow a local administration of the smart card 12, as portable device;
- there is no infraction of the security rules relating to the personal computer 11, as host device;
- the TCP/IP communication protocol is re-used at reduced costs;
- no particular additional network communication protocol stack is used to access the smart card 12, firstly as server, and then as client.

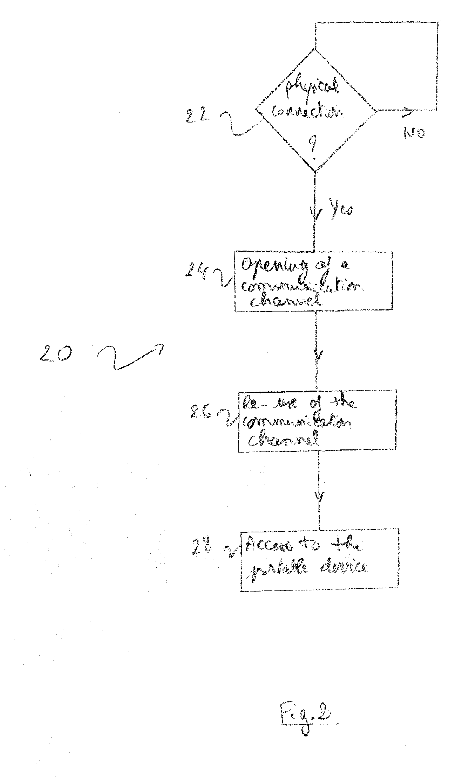

Figure 2 shows an embodiment of the invention method 20 for accessing the smart card 12 from the personal computer 11, as two network entities.

Firstly, the personal computer 11 checks 22 whether it is physically connected to the smart card 12, before initiating any exchange of data with the smart card 12.

According to another embodiment, the smart card 12 checks whether it is physically connected to the personal computer 11.

The personal computer 11 cooperates, only in a connected mode, with the smart card 12, in order to interact with each other.

Once the personal computer 11 detects that it is connected to the smart card 12, then the personal computer 11 launches an application, as a "local client application". Such an application is stored within a memory accessible from the personal computer 11. For example, the local client application is downloaded from either the smart card 12 just after their physical connection or a remote server 17 linked to the personal computer 11.

The execution of the local client application by the personal computer 11 runs a task according to which the personal computer 11 initiates a connection according to the TCP/IP communication protocol.

As soon as the smart card 12 detects that it is linked to the personal computer 11, then the smart card 12 launches an application, like an agent. Such an application is stored within a memory 124 of the smart card 12, only accessible through the microprocessor 122 of the smart card 12.

According to an optional embodiment, an automatic launching application is executed at a physical connection of the smart card 12, e.g. "autorun" feature of its operating system causing, for example, the loading of the local client application within the personal computer 11.

The execution of the agent by the smart card 12 runs a task according to which the smart card 12 listens, upon the dedicated port, as entry access point.

The smart card 12 waits, upon the entry access point, for the receipt of a request message for opening a connection, as TCP/IP server.

Once the smart card 12 receives the request message for opening the connection, then the smart card 12 sends to its originator a response message for accepting the opening of the connection, while using as parameter for the connection, the exit access point of its originator and its own entry access point.

Then, the smart card 12 receives from the personal computer 12, as TCP/IP client, through the open socket, a message for acknowledging a receipt of the response message.

The personal computer 11, as TCP/IP client, opens 24 a connection, as communication channel, to the smart card 12, as TCP/IP server.

It is to be noted that a link between the exit access point pertaining to the personal computer 11 and the entry access point pertaining to the smart card 12 creates a socket, as communication channel. The socket may thus be open between the two involved entities, namely the smart card 12 and the personal computer 11, as originator of the request message.

Once the message for acknowledging has been received, the smart card 12 then re-uses 26 the open communication channel to exchange data with the personal computer 11.

More exactly, the smart card 12 transmits, as HTTP client, a request message for transferring data to the personal computer 11, as HTTP server, while re-using the previously open communication channel.

After such a transmission of a request message, the smart card 12 waits for a receipt of a response message for transferring data through the open connection.

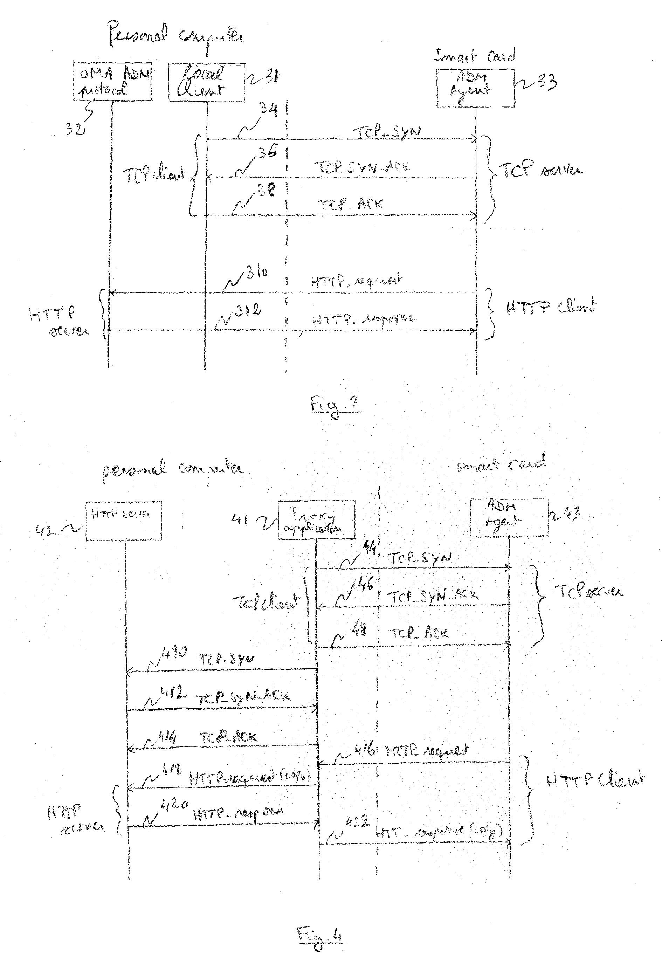

Figure 3 shows a first embodiment of a message flow between the smart card 12 and the personal computer 11.

As indicated previously, the personal computer 11 can constitute a smart card management system. The personal computer 11 includes two modules, one module relating to a local client 31, and another module relating to an OMA administration protocol 32. As to the smart card 12, it includes one module relating to an administration agent 33.

Firstly, the local client module 31 sends to the administration agent module 33 a first message 34, namely a request for opening a connection, to start an exchange of three messages of TCP/IP communication protocol, also termed TCP handshake, as known per se. The TCP handshake includes, as first message, a message termed TCP_SYN.

Then, the administration agent module 33 sends to the local client module 31 a second message 36, namely a response for accepting an opening of the requested connection, included within the TCP handshake, a message termed TCP_SYN_ACK.

After having received the second message 36, the local client module 31 sends to the administration agent module 33 a third message 38, namely an acknowledgement of a receipt of the response by the administration agent module 33. The TCP handshake includes, as third message, a message termed TCP_ACK.

During the exchange of the first three messages, the personal computer 11 plays the role of a TCP client, while the smart card 12 plays the role of a TCP server.

Such an exchange allows to establish a communication channel or a socket between the personal computer 11 and the smart card 12, at the initiative of the personal computer.

Then, the personal computer 11 and the smart card 12 will re-use, to implement the HTTP communication protocol, the TCP socket that has just been open.

Firstly, the administration agent module 33 sends to the OMA administration protocol module 32 a fourth message 310, namely a request, while being transported within the TCP socket.

Then, the OMA administration protocol module 32 transmits to the administration agent module 33 a fifth message 312, namely a response to the previous message, while being transported within the TCP socket.

During the exchange of the last two messages, the personal computer 11 plays the role of an HTTP server, while the smart card 12 plays the role of an HTTP client.

To play the role of the HTTP server, the HTTP server implements: a connection management module, an HTTP stack, and a set of HTTP applications.

The connection management module is notably in charge of waiting for any incoming TCP connection from a HTTP client, in particular the administration agent 33 of the smart card 12.

According to a variant, the connection management module is adapted to open a TCP connection to the administration agent 33 of the smart card 12, as HTTP client (instead of waiting any incoming TCP connection). The corresponding information to use the open TCP connection is then sent to the HTTP stack, so as to be used by the set of HTTP applications.

The HTTP stack decodes the HTTP communication protocol by using the TCP connection provided by the connection management module.

The set of HTTP applications processes any HTTP request, in order to serve any static or dynamic content, by providing a corresponding HTTP response.

Thus, the personal computer 11 is successively a TCP client and an HTTP server, while the smart card 12 is successively a TCP server and an HTTP client in the same time.

Figure 4 shows a second embodiment of a message flow between the smart card 12 and the personal computer 11 implementing a proxy.

The personal computer 11 can constitute a smart card management system. The personal computer 11 includes two modules, namely one module pertaining to a proxy application 41 and another module pertaining to a HTTP server 42.

According to another embodiment (not represented), the personal computer 11 includes only one module pertaining to a proxy application. In such an embodiment, another personal computer hosts another module pertaining to a HTTP server. Such an embodiment allows to divide the charge of each involved personal computer.

The role of the proxy application 41 consists in exchanging data on behalf of the client of the smart card 12, in order to possibly restrain the access to and/or from the smart card 12 by forwarding the considered data without modifying it.

The proxy application is then an intermediary module between the personal computer 11 and the smart card 12.

As to the smart card 12, it includes one module relating to an administration agent 43 that interacts with the personal computer 11, in a first time period, as TCP server, and, in a second time period, as HTTP client.

Firstly, the proxy application 41, as TCP client, establishes a first TCP connection to the administration agent 43, as TCP server, by using the three messages TCP handshake, as known per se.

To establish the TCP connection, the proxy application 41 transmits to the administration agent 43 a first message 44, namely the message termed TCP_SYN.

After its receipt by the administration agent 43, the administration agent 43 transmits to the proxy application 41 a second message 46, namely the message termed TCP_SYN_ACK.

When the proxy application 41 has received and processes the second message, the proxy application 41 sends to the administration agent 43 a third message 48, namely the message termed TCP_ACK, to acknowledge the receipt of the second message.

Once the first TCP connection has been open between the proxy application 41 and the administration agent 43, the proxy application 41 replays the same TCP handshake process with the HTTP server 42 to open a second TCP connection between the proxy application 41 and the HTTP server 42. To open the second TCP connection, the proxy application 41 uses the same connection mechanism than the one used for opening the first TCP connection. To perform such a second TCP connection to the HTTP server, the proxy application 41 knows the access point to be used as entry point of the HTTP server.

More exactly, to establish the second TCP connection, the proxy application 41 transmits to the HTTP server 42 a fourth message 410, namely the message termed TCP_SYN.

After its receipt by the HTTP server 42, the HTTP server 42 transmits to the proxy application 41 a fifth message 412, namely the message termed TCP_SYN_ACK.

When the proxy application 41 has received and processes the fifth message, the proxy application 41 sends to the HTTP server 42 a sixth message 414, namely the message termed TCP_ACK, to acknowledge the receipt of the second message.

Thus, the proxy application 41 is connected, on one hand, to the administration agent 43 through the first TCP connection, and on the other hand, to the HTTP server 42 through the second TCP connection.

During a phase of exchanging data relating to the HTTP communication protocol, the proxy application 41 plays a role in which it forwards each message received from one of the administration agent 43 through the first TCP connection and the HTTP server 42 through the second TCP connection to the other one, namely respectively to the HTTP server 42 through the second TCP connection and the administration agent 43 through the first TCP connection (without modifying the content of the concerned message).

The administration agent 43, as HTTP client, sends through the first TCP connection to the proxy application 41, a seventh message 416, namely the message termed HTTP_request.

Once the proxy application 41 receives and processes the HTTP_request message, the proxy application 41 sends, through the second TCP connection, to the HTTP server 42 an eighth message 418 constituted by a copy of the received HTTP_request.

After the HTTP server 42 has received and processes the HTTP_request copy message, the HTTP server 42 transmits, through the second TCP connection, to the proxy server 41 a ninth message 420, namely the message termed HTTP_response.

Finally, the proxy application 41 receives and processes the HTTP_response message, then the proxy application 41 transmits, through the first TCP connection, to the administration agent 43 a tenth message constituted by a copy of the received HTTP_response.

Figure 5 shows a communication channel used for accessing the smart card 12 from the personal computer 11.

The personal computer 11 has one exit access point 52, from which it sends, through one entry access point 54, to the smart card 12 a request message for opening, as client, a TCP/IP socket 56, as communication channel.

Once the TCP/IP socket 56 has been open, the smart card 12 uses the TCP/IP socket 56 to exchange any message by using the HTTP communication protocol.

More exactly, firstly the smart card 12 sends to the personal computer an HTTP request message 58 through the open TCP/IP socket 56.

The sending of the HTTP request message 58 that is encapsulated corresponds with one or several outgoing messages transmitted by the smart card 12 to the personal computer 11, while using the TCP/IP communication protocol, and, one incoming message is received by the smart card 12 while using the TCP/IP communication protocol. The incoming message indicates that the personal computer 11 acknowledges a receipt of the outgoing message(s) sent by the smart card 12.

As known per se, an encapsulation of a communication protocol within another communication protocol relating to an upper layer than the communication protocol that is encapsulated means that one message using a first level communication protocol can be sent through one or several outgoing messages and one incoming message using a higher level communication protocol.

Once received and processed by the personal computer 11, the personal computer 11 transmits to the smart card 12 a corresponding HTTP response 510 through the open socket 56.

Likewise, the sending of the HTTP response message 510 that is encapsulated corresponds with one or several outgoing messages transmitted by the personal computer 11 to the smart card 12, while using the TCP/IP communication protocol. One incoming message that indicates that the smart card 12 acknowledges a receipt of the outgoing message(s) is then received by the personal computer 11 while still using the TCP/IP communication protocol.

## Claims

1. A method (20) for accessing a portable device (12), said portable device being connected to a host device (11),
**characterized in that** said host device, as client, opens (24) a communication channel (56) to said portable device, as server, according to a first network communication protocol,
and **in that** said portable device, as client, uses (26) said communication channel (56) to transport data to said host device, as server, according to a second network communication protocol.

2. Method according to claim 1, wherein said first network communication protocol includes the following steps :
- said host device transmits to said portable device a request for opening a communication channel;
- said portable device transmits to said host device a response for accepting an opening of the communication channel.

3. Method according to claim 2, wherein said first network communication protocol includes the following step :
- said host device transmits to said portable device a message for acknowledging a receipt of said response.

4. Method according to any of claims 1 to 3, wherein said second network communication protocol includes the following steps :
- said portable device transmits to said host device a request message for securing an exchange of data between said portable device and said host device;
- said host device transmits to said portable device a response message for allowing an authentication of said host device, as server, and/or said portable device, as client, and/or an encrypted communication between said portable device and said host device.

5. Method according to any of claims 1 to 4, wherein said second network communication protocol includes the following steps :
- said portable device transmits to said host device a request message for transferring data from and/or to said portable device;
- said host device transmits to said portable device a response message for transferring data from and/or to said host device.

6. Method according to any of claims 1 to 5, wherein said first network communication protocol is a TCP/IP communication protocol.

7. Method according to any of claims 1 to 6, wherein said second network communication protocol is a HTTP communication protocol.

8. A system (10) for accessing a portable device (12), said portable device being connected to a host device (11), said system comprising said portable device and said host device,
**characterized in that** said host device, as client, is configured to open a communication channel (56) to said portable device, as server, according to a first network communication protocol,
and **in that** said portable device, as client, is configured to use said communication channel (56) to transport data to said host device, as server, according to a second network communication protocol.

9. System according to claim 8, wherein said host device comprises means for transmitting to said portable device a request of opening a communication channel, according to said first network communication protocol, and wherein said portable device comprises means for transmitting to said host device a response for accepting an opening of the communication channel, according to said first network communication protocol.

10. System according to claim 9, wherein said host device comprises means for transmitting to said portable device a message for acknowledging a receipt of said response, according to said first network communication protocol.

11. System according to any of claims 8 to 10, wherein said portable device comprises means for transmitting to said host device a request message for securing an exchange of data between said portable device and said host device, according to said second network communication protocol,
and wherein said host device comprises means for transmitting to said portable device a response message for allowing an authentication of said host device, as server, and/or said portable device, as client, and/or an encrypted communication between said portable device and said host device, according to said second network communication protocol.

12. System according to any of claims 8 to 11, wherein said portable device comprises means for transmitting to said host device a request message for transferring data from and/or to said portable device, according to said second network communication protocol,
and wherein said host device comprises means for transmitting to said portable device a response message for transferring data from and/or to said host device, according to said second network communication protocol.

13. System according to any of claims 8 to 12, wherein said first network communication protocol is a TCP/IP communication protocol.

14. System according to any of claims 8 to 13, wherein said second network communication protocol is a HTTP communication protocol.

15. A portable device (12) accessible from outside,
**characterized in that** said portable device is configured to open a communication channel (56), as server, according to a first network communication protocol,
and **in that** said portable device is configured to use said communication channel (56) to transport data to outside, as client, according to a second network communication protocol.

16. Portable device according to claim 15, wherein said portable device comprises means for receiving from outside a request of opening a communication channel, according to said first network communication protocol, and wherein said portable device comprises means for transmitting to outside a response for accepting an opening of the communication channel, according to said first network communication protocol.

17. Portable device according to claim 16, wherein said portable device comprises means for receiving from outside a message for acknowledging a receipt of said response, according to said first network communication protocol.

18. Portable device according to any of claims 15 to 17, wherein said portable device comprises means for transmitting to outside a request message for securing an exchange of data between said portable device and outside, according to said second network communication protocol,
and wherein said portable device comprises means for receiving from outside a response message for allowing an authentication of its originator, as server, and/or said portable device, as client, and/or an encrypted communication between said portable device and outside, according to said second network communication protocol.

19. Portable device according to any of claims 15 to 18, wherein said portable device comprises means for transmitting to outside a request message for transferring data from and/or to said portable device, according to said second network communication protocol,
and wherein said portable device comprises means for receiving a response message for transferring data from and/or to outside, according to said second network communication protocol.

20. Portable device according to any of claims 15 to 19, wherein said portable device is a smart card.

21. Portable device according to any of claims 15 to 19, wherein said portable device is a personal token.

22. A host device (11) for accessing a portable device,
**characterized in that** said host device is configured to open a communication channel (56), as client, according to a first network communication protocol,
and **in that** said host device is configured to use said communication channel (56) to transport data, as server, from outside, according to a second network communication protocol.

23. Host device according to claim 22, wherein said host device comprises means for transmitting to outside a request of opening a communication channel, according to said first network communication protocol,
and wherein said host device comprises means for receiving from outside a response for accepting an opening of said communication channel, according to said first network communication protocol.

24. Host device according to claim 23, wherein said host device comprises means for transmitting to outside a message for acknowledging a receipt of said response, according to said first network communication protocol.

25. Host device according to any of claims 22 to 24, wherein said host device comprises means for receiving from outside a request message for securing an exchange of data between said host device and outside, according to said second network communication protocol,
and wherein said host device comprises means for transmitting to outside a response message for allowing an authentication of said host device, as server, and/or its addressee, as client, and/or an encrypted communication between said host device and outside, according to said second network communication protocol.

26. Host device according to any of claims 22 to 25, wherein said host device comprises means for receiving from outside a request message for transferring data from and/or to outside, according to said second network communication protocol,
and wherein said host device comprises means for transmitting a response message for transferring data from and/or to outside, according to said second network communication protocol.

27. Host device according to any of claims 22 to 26, wherein said host device is a mobile phone.

28. Host device according to any of claims 22 to 26, wherein said host device is a personal computer.
